# EUROPEAN PATENT SPECIFICATION

(11) **EP 1 398 088 B1**
(45) Date of publication and mention of the grant of the patent: **16.05.2007**
(21) Application number: 03015173.2
(22) Date of filing: 04.07.2003
(51) Int. Cl.: B09B 1/00, B09B 3/00

(54) **Method of Surface Reclamation of Exhausted Landfills of Urban Solid Waste**
Verfahren zur Sanierung der Oberflächen von Mülldeponien
Procédé pour la restauration de la surface de décharges de déchets municipaux

(30) Priority: 12.09.2002 IT VI20020196
(43) Date of publication of application: 17.03.2004
(73) Proprietor: Ecodeco S.R.L., 20124 Milano (IT)
(72) Inventor: Donati, Gianni, 27010 Giussago, (PV) (IT); Natta, Giuseppe, 27010 Giussago, (PV) (IT)
(74) Representative: Minoja, Fabrizio

(56) References cited:
- EP-A- 0 623 399
- EP-A- 0 706 839
- WO-A-91/16153
- US-A- 4 768 897

## Description

### Field of Application

The present invention relates in general to the sector of waste treatment and in particular its object is a method for surface reclamation of an exhausted or disused conventional landfill of buried solid waste using urban solid waste (USW) from selective or non-selective collection.

More particularly the method according to the invention relates to the activity of environmental reclamation of landfills both by reusing materials difficult to allocate, such as urban solid waste, and by enhancing rundown areas such as landfills, with an increase in the underground storage capacity of carbon (carbon sink) per hectare higher than that of natural wooded land.

### State of the Art

In all industrially developed countries the collection of urban solid waste (USW) is selective in order to recover materials such as glass, paper, board, plastic and vegetable scraps which can be used or recycled in industrial processes for the production of consumer goods.

The percentage of selective collection is considered an indicator of the environmental awareness of a people. Currently an optimal and virtually impossible objective consists of a percentage of selective collection of 40%.

Therefore the remaining part or residual fraction (RF) of non-selective waste, in a quantity varying between 60% and 90% of the whole, has to be disposed of by traditional methods. This residual fraction is wholly similar to that of urban solid waste (USW) in terms of humidity and putrescibility and therefore has the same difficulties of transport, storage and handling.

Normally disposal of urban solid waste (USW) or its residual fraction (RF) is by incineration or landfilling.

These known methods of disposal have some recognised disadvantages.

As regards the process of incineration, generally presented as energy recovery, it is often criticised for the following reasons. Since the waste is material with heterogeneous physical properties, the incinerators are complex systems which have to treat masses with a high humidity content and minimal low heat value, difficult to store and feed and with a considerably differentiated chemical composition. During combustion these materials produce gases rich in pollutants and volatile ash which require special and extremely expensive boilers fitted with complicated systems for the cleaning and treatment of fumes.

The extent of the inefficiency of incinerators is easily seen both in the quantity of CO₂ emitted per unit of useful energy and in the cost of the useful energy produced. In the case of incineration systems which use USW or RF without any preliminary treatment, the cost per kWh fed to the grid is 4 to 6 times higher than that obtained from standard methane plants.

These higher costs can only be borne by specific subsidies for the production and sale of electrical energy and with costs which are in any case high for the disposal of waste. Moreover, with this method, the carbon contained in the waste is converted, mostly, into carbon dioxide which contributes to the greenhouse effect, in a greater quantity compared to methane or naphtha for the same electrical energy produced.

As a result also of these objective considerations, incineration is considered hazardous by leading environmentalist associations and the building of incinerators is strongly opposed by residents near the sites on which the plants are to stand.

As regards the methods of storage at the landfill, it is known that putrescible material ferments by an anaerobic mechanism which generates volatile substances, also referred to overall as biogas, with a considerable olfactory impact, both during operations of storage and after closure of the landfill. Anaerobic digestion of the landfilled waste is considerably prolonged in time and may even last for decades.

Even with systems for capturing these emissions the biogas spreads partially towards the surface and therefore constitutes a phytotoxic element which for years inhibits growth of normal vegetation on the covering soil.

To avoid this disadvantage an impermeable sheet, generally in a plastic material, is placed under the cover soil. However this method limits the pedological quality of the soil and its capacity for growth of vegetation, in particular of woody vegetation, due to the limited thickness of the covering soil and the lack of normal drainage.

Moreover, also in the case of landfilling, the waste, or residual fraction of the same, causes a significant release of carbon into the atmosphere both in the form of carbon dioxide and in the form of methane, which constitutes the most significant fraction of the biogas. Moreover the lack of vegetation on the surface of the landfill leads to a lack of absorption of CO₂.

Currently, also as a result of international agreements, there is tendency towards restricting release into the atmosphere of gases such as CO₂ and CH₄, which are most responsible for the greenhouse effect. In particular there is a tendency to restrict the release of methane whose effect is approximately five times that of carbon dioxide.

For these reasons the method of disposal in a landfill entails the need to incur considerable costs for extremely long times, and therefore requires the allocation of resources to bear these costs, alternative methods of using areas occupied by landfills not being available at present.

EP-B-706839, in the name of the same Applicant, describes a method and a system for the production of a bio-dried product starting from urban solid waste or from the residual fraction of the same.

The aforesaid method, defined in short as bio-drying, uses, as energy for evaporating the water, the heat produced by the aerobic digestion of the putrescible fraction of the waste to be treated. The metals are if necessary separated after the step of bio-drying.

With this method a homogeneous, dry and imputrescible product is obtained, easy to transport and store, and commonly known as bio-dried product. The bio-dried product can be landfilled or advantageously used as secondary fuel (SF) as-is or after refining with extraction of the inorganic substances.

Another such method is known from document EP-A- 0623399.

Italian patent no. 1297234, in the name of the same Applicant, discloses a method and apparatus for the preparation and transport to the end user of a secondary fuel obtained through bio-drying.

From the Italian patent application no. BS2002A000055 a method and a system are known for the stabilisation of fermentable waste which allows the process of bio-drying of waste to be automated.

By using the bio-dried residual fraction as secondary fuel a system which is much cleaner, safer and more efficient from the energy standpoint compared to direct incineration, and a considerable reduction in the quantity of CO₂ produced per kWh of net energy are obtained.

In the case of storage in the landfill, since the bio-dried product is not very susceptible to digestion it does not lead to the formation of biogas or of other compounds with an olfactory impact. The environmental impact and the CO₂ produced are reduced by 90%.

Nevertheless, even the known methods of waste treatment mentioned above can be improved.

In particular, due to the small size of the systems, the combustion of bio-dried and prepared waste also has a lower yield compared to the combustion of fossil fuels in traditional thermoelectric power plants, in terms both of investment and of management.

Since the quantity of energy per unit of carbon released into the atmosphere produced in the thermoelectric power plants is higher than that obtained by waste combustion, in the latter case a greater net emission of carbon into the atmosphere is obtained.

In the case of landfilling according to the known technique, a disadvantage is created by the occupation, and therefore of the appropriation, of new areas for the building of the landfill.

In any case a positive local environmental balance, consequently acceptable to local residents, is not obtained. It should be remembered that agreement by local residents is the main obstacle to solving the problems linked to waste disposal:

### Description of the Invention

An object of the present invention is to provide a method for the surface reclamation of an exhausted conventional landfill of buried solid waste by using fresh urban solid waste (USW) from selective collection which enables environmental benefits and agreement to the installation of landfills by local residents to be obtained.

A further object is to provide a method for restricting the diffusion of biogas and elimination of negative olfactory effects coming from a landfill.

Another object is to provide a method for reducing the environmental impact of existing landfills so that the recovery work has a distinct environmental and financial benefit.

Still another object is to provide a method which allows proper growth of trees with normal rooting on the cover layer of an exhausted landfill, and therefore forestry use with the creation of a carbon absorption site (carbon sink).

Still a further object is to provide a method for using areas with high environmental deterioration, locating at the same carbon accumulation sites for long periods.

Last but not least one object is to provide an acceptable waste disposal method in environmental terms which allows an alternative use to the combustion of the bio-dried product.

These objects and others, which will be explained in greater detail herein under, are achieved by the method for surface reclamation of the invention.

Thanks to this method it is possible to maximise the total accumulation of carbon per unit of area of the landfill and minimise undesirable emissions, improving the environmental balance and avoiding the use of sheets of plastic material under the cover soil which limit the growth of roots at depth.

Moreover with this method it is possible to improve the properties of the surface layer of soil and increase the capacity for water retention, achieving pedological quality and therefore fostering the growth of vegetation to a greater extent than that of surrounding farmland.

Thus the lower cost of storage of the bio-dried product in an exhausted existing landfill, compared to allocation to a new landfill, enables economic benefits to be obtained, related to the problems of management of the disused landfill, such as the disposal of the percolate and the control of emission of biogas for the entire life cycle of the landfill.

Finally, since the bio-dried product also constantly retains its components containing degradable carbon such as paper, wood and other materials of a natural origin, it is possible to create through industrial planting a site for total storage of carbon (carbon sink), characterised by a total carbon content per square metre of surface area higher than that of a wooded surface of the same natural and local extent.

### Brief description of the drawings

Further features and advantages of the invention will be made clearer from the following detailed description of a method for surface reclamation of an exhausted conventional landfill, given by way of a non-limiting example with the aid of the accompanying drawings, in which:
**FIG. 1** shows a block diagram of the method according to the present invention;
**FIG. 2** shows a schematic section of a landfill for urban solid waste with environmental reclamation performed according to the method of FIG. 1;
**FIG. 3** shows the average concentrations of methane in ambient air measured near a landfill which uses the method of environmental reclamation according to the invention.

### Detailed description of a preferred embodiment

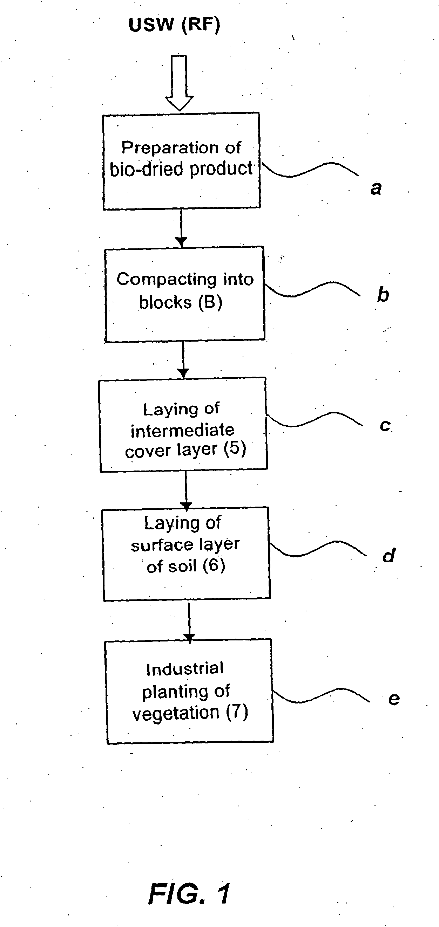

Referring to Figure 1, a method is outlined for use of the residual fraction of urban solid waste for the environmental reclamation of exhausted landfills using urban solid waste (USW) obtained from selective or non-selective collection.

In particular the method comprises a first step (a) of preparation of an intermediate product, the bio-dried product, from urban solid waste (USW).

The bio-dried product is subjected to a step (b) of compacting in order to obtain blocks B of predetermined shape, volume and density.

This is followed by a step (c) of laying of the blocks B obtained during the step (b) on the surface of the landfill so as to form an intermediate cover layer of substantially constant thickness.

Subsequently a step (d) is carried out of covering of the intermediate cover layer of blocks B with a surface layer of cultivable soil of predetermined minimum thickness.

It should be noted that the method described above explicitly excludes the laying of an impermeable sheet between the surface of the intermediate cover layer and the surface layer of soil, to avoid restriction of deep rooting of any plant species.

Finally, on the surface layer of soil, the step (e) of industrial planting is carried out with trees and/or shrubs.

The absence of the aforementioned impermeable sheet and the presence of the intermediate layer of blocks of bio-dried product means that the vegetation can take root at depth in the surface layer of soil, encouraging its growth in conditions which are even better than those of a wood of the same type and composition situated on normal land. Moreover the absence of the impermeable sheet allows a considerable saving to be made in management of the landfill itself.

Advantageously the bio-dried product is prepared from the residual fraction (RF) of the urban solid waste obtained from selective collection.

This step of preparation involves elimination from the residual fraction (RF) of the putrescible part by drying through aerobic digestion (bio-drying).

Aerobic digestion is preferably carried out in order to obtain a bio-dried product virtually free of putrescible material, with a water content lower than 25% by weight, and a zero or limited content of pathogenic germs. The resulting bio-dried product is stable in terms of putrefaction, wherein the part containing carbon is in the form of a plastic material or paper or wood, the latter non-degradable as dry.

Bio-drying can involve the subsequent extraction of metals and/or other specific materials.

The digestion process can be carried out by aspirating air through said residual fraction (RF) placed in a closed environment. The air can be aspirated in a forced manner, in a substantially closed environment, with air aspirated through the residual fraction of the urban solid waste previously shredded and layered on a filter floor which allows air to pass through.

The step (b) of compacting can be carried out, for example, by means of presses capable of forming blocks B shaped approximately like a cube or parallelepiped of predetermined volume, for example approximately 2m³, and an apparent density of approximately 700 kg/m³.

Advantageously the thickness of the layer formed by the bio-dried product is such as to degrade the biogas totally and is no smaller than 2 metres.

The bio-dried product, a material capable of retaining water for up to 80% of its own dry weight, is capable of absorbing water which percolates from the topsoil in wet periods and to return it to the same through a capillary action in dry periods, limiting the formation of percolate and making irrigation of the surface layer of soil superfluous.

In this way it is possible to achieve on the site of the landfill particularly luxuriant growth of vegetation, including trees, and therefore a store of carbon which, together with that contained in the bio-dried product, maximises the quantity stored per surface unit. This site consists of the carbon contained in the waste present in the same landfill, the bio-dried product wherein the carbon is present in the form of paper and board not immediately available and the tall tree vegetation above.

It can be seen that the blocks B are arranged with their sides walls substantially in reciprocal contact so as to avoid exposure of the same and break up continuity of said intermediate layer.

For this purpose it is possible to position perimeter margins of the landfill, not illustrated in the drawings, so as to contain laterally the blocks B and maintain their side walls substantially in reciprocal contact.

Moreover the planting of various plant species is carried out with native trees and/or shrubs already selected via natural evolution for the area wherein the landfill is located.

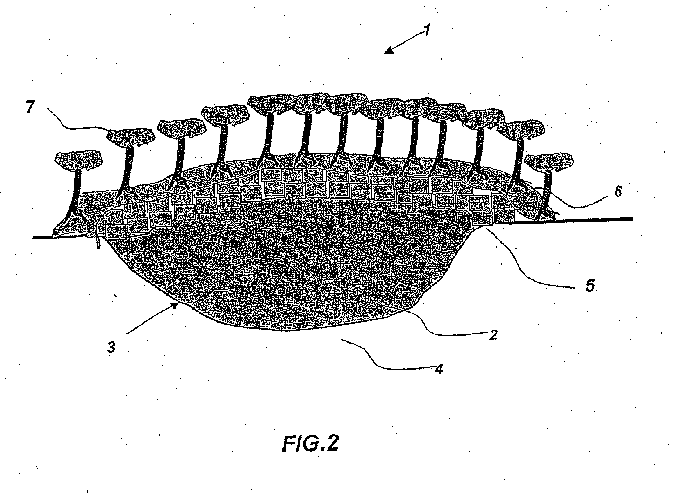

Referring to Fig. 2, an exhausted landfill of solid waste subjected to environmental reclamation in accordance with the method according to the invention has been denoted overall with reference numeral 1.

It comprises a mass of waste 2, landfilled over a natural or artificial waterproofing layer 3 of insulation in relation to the soil 4 below and around. If necessary, drainage pipes may be provided for collecting the percolate, not shown in the figures.

According to the invention, on the mass of waste 2 an intermediate cover layer 5 is placed, formed with bio-dried product obtained from fresh urban solid waste (USW) or from its residual fraction (RF). Advantageously the bio-dried product is compacted so as to take on the shape of blocks B.

On the intermediate cover layer 5 a layer 6 of infill soil is placed, whereon plant species 7, preferably wood or shrub, are planted.

An example of the method described above is given herein below.

### Example

A continuous layer, approximately 10 m thick, of bio-dried product, pressed into blocks or strapped bales approximately 2m³ each, was placed in an experimental landfill with a surface area of approximately 11 hectares. On this layer farming soil was placed, taken from neighbouring areas farmed with farm machinery, sown with dwarf lolium and planted with the species Berberis vulgaris, Cornus mas, Cornus sanguinea, Corylus avellana, Crataegus monogyna, Euonymus europaeus, Ligustrum vulgare, Malus sylvestris, Prunus spinosa, Rhamnus catharticus, Rosa canina and Viburnum lantana.

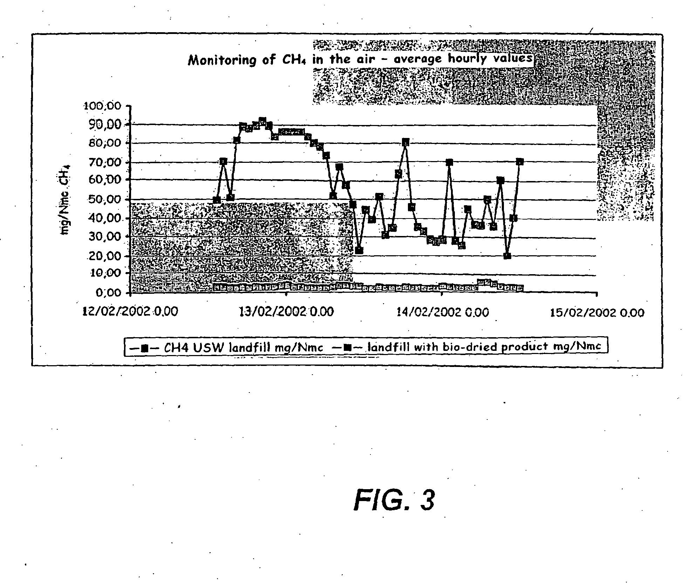

The graph in FIG. 3 shows the average concentrations in ambient air of methane, measured near the landfill with bio-dried product and the conventionally managed landfill for USW respectively. The average concentrations of methane measured in the landfill containing the bio-dried product, although lacking any system of aspiration of the biogas, are 2% of those found in the landfill for urban solid waste according to the prior art, wherein a complex system is installed which conveys the gas extracted from the pile of waste to a flare, and are similar to those normally present in farmland.

On the layer of soil covering the intermediate layer of pressed bio-dried product blocks, shrubbery of approximately 11.100 m² was thus formed.

The data relating to the growth of the population of shrub species planted in the shrubbery are given in Table 1.

**Table 1**

| Shrub species | Number | Height (cm) | Rooting (%) | Size after 24 months (cm) |
|---|---|---|---|---|
| Berberis vulgaris | 285 | 40/50 | 95 | 100 |
| Cornus mas | 516 | 30/40 | 90 | 50/60 |
| Cornus sanguinea | 361 | 40/50 | 90 | 70/100 |
| Corylus avellana | 338 | 30/40 | 90 | 50/60 |
| Crataegus monogyna | 516 | 60/80 | 95 | 100/120 |
| Euonymus europaeus | 471 | 40/50 | 90 | 60/80 |
| Ligustrum vulgare | 494 | 30/40 | 90 | 100/180 |
| Malus sylvestris | 76 | 50/60 | 95 | 80/100 |
| Prunus spinosa | 551 | 30/40 | 95 | 60/80 |
| Rhamnus catharticus | 361 | 50/60 | 95 | 80/120 |
| Rosa canina | 551 | 40/50 | 95 | 80/120 |
| Viburnum lantana | 418 | 60/80 | 85 | 80/120 |

From what is described above, it is clear that the method for surface reclamation of exhausted landfills according to the invention achieves the objects set and in particular allows disposal of fresh urban solid waste (USW) or of its residual fraction (RF) in the most economical manner and with least environmental impact, allows the location of sites having a positive environmental balance and therefore accepted by residents, and an improving reuse of the surface of a landfill capable of generating the economic resources for paying the costs of closure of the same in the case of failure to make allocations in order to bear the aforesaid costs.

## Claims

1. Method for the surface reclamation of an exhausted conventional landfill of solid waste by using urban solid waste (USW) from selective or non-selective collection, comprising the following steps:
- (a) preparation of an intermediate product, known as bio-dried product, from said urban solid waste (USW),
- (b) compacting of the bio-dried product to obtain blocks (B) of predetermined shape, volume and density;
- (c) laying on the surface of the landfill of a plurality of said blocks (B) so as to form an intermediate cover layer (5) of substantially constant thickness, suitable for filtering the biogas generated by the waste stored in said landfill;
- (d) covering of said intermediate cover layer of blocks of bio-dried product with a surface layer (6) of cultivable soil of predetermined minimum thickness in the absence of intermediate impermeable sheets;
- (e) industrial planting of said surface layer of soil with appropriate tall plant species (7) so as to allow said vegetation to take root deep down.

2. Method of surface reclamation according to claim 1, **characterised in that** said step (a) of preparation of the bio-dried product is carried out on the residual fraction (RF) of urban solid waste (USW) from selective collection.

3. Method of surface reclamation according to claim 2, **characterised in that** said step (a) of preparation of the bio-dried product comprises elimination of the putrescible part of said residual fraction (RF) by drying via aerobic digestion.

4. Method of surface reclamation according to claim 3, **characterised in that** said aerobic digestion is carried out up to a loss in weight higher than 25%.

5. Method of surface reclamation according to claim 3, **characterised in that** said aerobic digestion is forced and is carried out by aspiration of air through said residual fraction (RF) placed in a closed environment.

6. Method of surface reclamation according to claim 1, **characterised in that** said compacting step (b) is carried out until an apparent density of the intermediate bio-dried product equal to at least 700 kg/m3 is achieved so as to allow absorption of water equal to at least 80% by weight.

7. Method of surface reclamation according to claim 1, **characterised in that** the thickness of said intermediate layer (5) of blocks (B) is at least equal to 2m so as to contain the diffusion of biogas and/or eliminate the negative olfactory effects and allow the rooting of all the plant species (7).

8. Method of surface reclamation according to claim 1, **characterised in that** said blocks (B) are made in the form of bales having a substantially cubic or parallelepiped shape.

9. Method of surface reclamation according to claim 1, **characterised in that** said blocks (B) are placed with their side walls substantially in reciprocal contact to avoid exposure of the same and break up the continuity of said intermediate layer.

10. Method of surface reclamation according to claim 9, **characterised in that** perimeter margins are arranged to contain said blocks laterally and maintain their side walls substantially in reciprocal contact.

11. Method of surface reclamation according to claim 1, **characterised in that** said planting (e) is carried out with native trees and/or shrubs already selected by natural evolution for the area wherein the landfill is located.

## Patentansprüche

1. Verfahren zur Oberflächenregenerierung einer erschöpften konventionellen Feststoffabfalldeponie durch Verwendung von städtischem Feststoffabfall (urban solid waste, USW) aus selektiver oder nichtselektiver Sammlung, die folgenden Schritte einschließend:
(a) Herstellung eines Zwischenprodukts, bekannt als biologisch getrocknetes Produkt, aus besagtem städtischem Feststoffabfall (USW),
(b) Verdichtung des biologisch getrockneten Produktes, um Blöcke (B) mit vorbestimmter Gestalt, Volumen und Dichte zu erhalten;
(c) Belegung der Oberfläche der Mülldeponie mit einer Vielzahl der besagten Blöcke (B), um eine Zwischendeckschicht (5) mit im wesentlichen konstanter Dicke zu bilden, geeignet zur Filterung, des Biogases das durch den in der besagten Mülldeponie lagernden Abfall gebildet wird;
(d) Abdeckung der besagten Zwischendeckschicht aus den Blöcken biologisch getrockneten Produktes mit einer Oberflächenschicht (6) aus kultivierbarer Erde mit vorbestimmter minimaler Dicke in Abwesenheit intermediärer undurchlässiger Folie;
(e) Industrielle Bepflanzung der besagten Oberflächenschicht mit geeigneten hoch wachsenden Pflanzensorten (7), so dass die genannte Vegetation tiefgehende Wurzeln bilden kann.

2. Verfahren zur Oberflächenregenerierung gemäß Anspruch 1, **dadurch gekennzeichnet, dass** der genannte Schritt (a) der Herstellung des biologisch getrockneten Produkts auf den Restanteil (residual fraction, RF) des städtischen Feststoffabfalls (USW) aus selektiver Sammlung ausgeführt wird.

3. Verfahren zur Oberflächenregenerierung gemäß Anspruch 2, **dadurch gekennzeichnet, dass** der genannte Schritt (a) der Herstellung des biologisch getrockneten Produktes die Beseitigung des faulbaren Teils des besagten Restanteils (RF) durch Trocknung mittels aerobe Verdauung einschließt.

4. Verfahren zur Oberflächenregenerierung gemäß Anspruch 3, **dadurch gekennzeichnet, dass** die genannte aerobe Verdauung bis zu einem Massenverlust größer als 25% ausgeführt wird.

5. Verfahren zur Oberflächenregenerierung gemäß Anspruch 3, **dadurch gekennzeichnet, dass** die genannte aerobe Verdauung durch Begasung mit Luft durch besagten Restanteil (RF), untergebracht in einer geschlossenen Umgebung, erzwungen und ausgeführt wird.

6. Verfahren zur Oberflächenregenerierung gemäß Anspruch 1, **dadurch gekennzeichnet, dass** der genannte Schritt der Verdichtung (b) ausgeführt wird, bis eine scheinbare Dichte des biologisch getrockneten Zwischenprodukts von gleich bis mindestens 700 kg/m³ erreicht ist, so dass eine Wasseraufnahme von gleich bis mindestens 80 Gewichts-% ermöglicht wird.

7. Verfahren zur Oberflächenregenerierung gemäß Anspruch 1, **dadurch gekennzeichnet, dass** die Dicke der besagten Zwischenschicht (5) aus den Blöcken (B) zumindest gleich 2 m beträgt, so dass sie die Diffusion von Biogas zügelt und/oder die negativen Geruchswirkungen eliminiert und die Durchwurzelung aller Pflanzensorten ermöglicht.

8. Verfahren zur Oberflächenregenerierung gemäß Anspruch 1, **dadurch gekennzeichnet, dass** die genannte Blöcke (B) in der Form von Ballen gemacht sind, welche im wesentlichen eine kubische oder parallelflächige Gestalt haben.

9. Verfahren zur Oberflächenregenerierung gemäß Anspruch 1, **dadurch gekennzeichnet, dass** die besagten Blöcke (B) mit ihren Seitenwänden im wesentlichen im wechselseitigem Kontakt angeordnet sind, um Exponierung der gleichen und Unterbrechung der Kontinuität der besagten Zwischenschicht zu vermeiden.

10. Verfahren zur Oberflächenregenerierung gemäß Anspruch 9, **dadurch gekennzeichnet, dass** die Umfassungsbegrenzungen so angeordnet sind, dass sie die genannte Blöcke seitlich eingrenzen und ihre Seitenwände im wesentlichen den wechselseitigen Kontakt beibehalten.

11. Verfahren zur Oberflächenregenerierung gemäß Anspruch 1, **dadurch gekennzeichnet, dass** die genannte Bepflanzung (e) mit einheimischen Bäumen und/oder Sträucher ausgeführt wird, die bereits durch natürliche Evolution für das Gebiet, in welcher die Deponie lokalisiert ist ausgewählt sind.

## Revendications

1. Procédé pour la restauration de la surface d'une décharge de déchets solides classique épuisée en utilisant les déchets municipaux solides (USW ; urban solid waste) issus d'une collecte sélective ou non sélective, comprenant les étapes suivantes :
- (a) préparation d'un produit intermédiaire, connu en tant que produit bio-séché, à partir desdits déchets municipaux solides (USW),
- (b) compactage du produit bio-séché pour obtenir des blocs (B) de forme, de volume et de densité prédéterminés ;
- (c) dépôt sur la surface de la décharge d'une pluralité desdits blocs (B) de manière à former une couche de couverture intermédiaire (5) d'épaisseur substantiellement constante, appropriée pour filtrer les biogaz générés par les déchets stockés dans ladite décharge ;
- (d) recouvrement de ladite couche de couverture intermédiaire de blocs de produit bio-séché avec une couche de surface (6) de sol cultivable d'épaisseur minimum prédéterminée en l'absence de films imperméables intermédiaires ;
- (e) plantation à l'échelle industrielle de ladite couche de surface de sol avec des espèces végétales hautes appropriées (7) de manière à permettre à ladite végétation de prendre racine en profondeur.

2. Procédé pour la restauration de surface selon la revendication 1, **caractérisé en ce que** ladite étape (a) de préparation du produit bio-séché est exécutée sur la fraction résiduelle (RF ; residual fraction) de déchets municipaux solides (USW) issus d'une collecte sélective.

3. Procédé pour la restauration de surface selon la revendication 2, **caractérisé en ce que** ladite étape (a) de préparation du produit bio-séché comprend l'élimination de la partie putrescible de ladite fraction résiduelle (RF) par séchage par digestion aérobie.

4. Procédé pour la restauration de surface selon la revendication 3, **caractérisé en ce que** ladite digestion aérobie est exécutée jusqu'à une perte en poids supérieure à 25%.

5. Procédé pour la restauration de surface selon la revendication 3, **caractérisé en ce que** ladite digestion aérobie est forcée et est exécutée par aspiration d'air à travers ladite fraction résiduelle (RF) placée dans un environnement fermé.

6. Procédé pour la restauration de surface selon la revendication 1, **caractérisé en ce que** ladite étape de compactage (b) est exécutée jusqu'à ce qu'une densité apparente du produit bio-séché intermédiaire égale à au moins 700 kg/m³ soit atteinte de manière à permettre une absorption d'eau égale à au moins 80% en poids.

7. Procédé pour la restauration de surface selon la revendication 1, **caractérisé en ce que** l'épaisseur de ladite couche intermédiaire (5) de blocs (B) est au moins égale à 2 m de manière à contenir la diffusion de biogaz et/ou éliminer les effets olfactifs négatifs et permettre l'enracinement de toutes les espèces végétales (7).

8. Procédé pour la restauration de surface selon la revendication 1, **caractérisé en ce que** lesdits blocs (B) sont faits sous la forme de balles ayant une forme substantiellement cubique ou parallélépipédique.

9. Procédé pour la restauration de surface selon la revendication 1, **caractérisé en ce que** lesdits blocs (B) sont placés avec leurs parois latérales substantiellement en contact réciproque pour éviter une exposition de ceux-ci et une interruption de la continuité de ladite couche intermédiaire.

10. Procédé pour la restauration de surface selon la revendication 9, **caractérisé en ce que** les marges de périmètre sont agencées de manière à contenir lesdits blocs latéralement et à maintenir leurs parois latérales substantiellement en contact réciproque.

11. Procédé pour la restauration de surface selon la revendication 1, **caractérisé en ce que** ladite plantation (e) est exécutée avec des arbres et/ou des arbustes natifs déjà sélectionnés par évolution naturelle pour la zone dans laquelle la décharge est située.
